# EUROPÄISCHE PATENTSCHRIFT

(11) **EP 0 697 325 B1**
(45) Veröffentlichungstag und Bekanntmachung des Hinweises auf die Patenterteilung: **24.10.2001**
(21) Anmeldenummer: 95112128.4
(22) Anmeldetag: 02.08.1995
(51) Int. Cl.: B62D 1/18

(54) **Lenkvorrichtung für Kraftfahrzeuge**
Steering system for motor vehicles
Système de direction pour véhicules automobiles

(30) Priorität: 19.08.1994 DE 4429365; 10.10.1994 DE 4436091
(43) Veröffentlichungstag der Anmeldung: 21.02.1996
(73) Patentinhaber: Leopold Kostal GmbH & Co. KG, 58507 Lüdenscheid (DE)
(72) Erfinder: Donner, Harald, D-58540 Meinerzhagen (DE); Kathol, Meinolf, D-57413 Finnentrop (DE); Heinze, Ralf, D-58513 Lüdenscheid (DE); Welschholz, Jörg, D-58849 Herscheid (DE)

(56) Entgegenhaltungen:
- EP-A- 0 499 001
- DE-A- 3 933 288
- DE-A- 4 210 130
- US-A- 4 893 518
- US-A- 4 997 053

## Beschreibung

Die vorliegende Erfindung geht von einer entsprechend dem Oberbegriff des Hauptanspruches konzipierten Lenkvorrichtung für Kraftfahrzeuge aus.

Bei Kraftfahrzeugen werden heutzutage in zunehmendem Maße Lenkvorrichtungen eingesetzt, die zwecks Komfortsteigerung und dabei insbesondere zur Anpassung an die körperlichen Gegebenheiten von mehreren ein und dasselbe Kraftfahrzeug benutzenden Personen eine Verstellung der Lenkspindel und damit des Lenkrades in axialer und/oder in radialer Richtung erlauben. Die Verstellungen werden dabei in der Regel über jeweils eine elektromotorisch betriebene Stellvorrichtung vorgenommen, wobei beispielsweise die Axialverstellung im Sinne eines Zahnstangenantriebs erfolgt und die Radialverstellung über einen Spindelantrieb vorgenommen wird.

Der Lenkspindel ist weiterhin in der Regel ein mechanisch bzw. elektromechanisch wirkendes Lenkschloß zugeordnet, um die unbefugte Benutzung bzw. die Entwendung eines Kraftfahrzeuges zumindest zu erschweren, wenn nicht zu verhindern.

Im Zusammenhang mit für Kraftfahrzeuge vorgesehenen Lenkvorrichtungen ist es z.B. durch die EP 0 499 001 B1 bekannt, die Lenkspindel axial verstellbar auszuführen, wobei der durch zwei Endlagen begrenzte Gesamtverstellbereich einerseits zwecks Anpassung des Lenkrades an die physischen Gegebenheiten des Fahrers in einen als Adaption-Zone anzusehenden ersten Verstellbereich und einen direkt daran anschließenden, eine unbefugte Benutzung bzw. eine Entwendung des Kraftfahrzeuges wenn nicht verhindernden so doch zumindest erschwerenden, als Blockier-Abschnitt anzusehenden zweiten Verstellbereich unterteilt ist.
Problematisch bei einer solchen Ausführungsform ist, daß die Lenkspindel bei in der Praxis vorkommenden Dejustierungen der zugeordneten Schaltmittel unabsichtlich von der Adaptions-Zone in den Blockier-Abschnitt gelangen kann, womit eine beachtliche Gefährdung nicht nur der Fahrzeuginsassen sondern auch der anderen Verkehrsteilnehmer verbunden ist.

Der vorliegenden Erfindung liegt die Aufgabe zugrunde, bei einer Lenkvorrichtung mit durch Fremdkraft erfolgender Axial- und/oder Radialverstellung der Lenkspindel unter nur geringfügig erhöhtem Aufwand im Bereich der Stellvorrichtung(en) auch eine wirkungsvolle, mit hoher Wahrscheinlichkeit sich nicht unabsichtlich verwirklichende Unterbindung der Beeinflussung des Lenkgetriebes über das Lenkrad zu realisieren.

Erfindungsgemäß wird die Aufgabe bei einer Lenkvorrichtung der eingangs erwähnten Art durch die im kennzeichnenden Teil des Hauptanspruches erwähnten Merkmale gelöst.

Vorteilhaft bei einem derartigen Aufbau ist, daß u.U. nur eine fremdkraftbetätigte Stellvorrichtung sowohl für die zur Adaption des Lenkrades an die physischen Gegebenheiten des Fahrers vorgesehene Axial- und/oder die Radialverstellung der Lenkspindel als auch für die Blockade bzw. den Freilauf derselben erforderlich ist, wobei die Lenkspindel nur absichtlich von der Adaptions-Zone in den Blockier- bzw. Freilauf-Abschnitt gelangen kann.

Weitere vorteilhafte Ausgestaltungen des erfindungsgemäßen Gegenstandes sind in den Unteransprüchen angegeben und werden anhand von zwei in der Zeichnung dargestellten Ausführungsbeispielen näher erläutert. Dabei zeigen
- Fig. 1: eine teilweise geschnittene und teilweise aufgebrochene Ansicht des wesentlichen Teiles der Lenkvorrichtung bei in einer Endlage des in axialer Richtung einstellbaren Verstellbereiches sich befindender Lenkspindel
- Fig. 2: den Gegenstand nach Fig. 1 bei in einer außerhalb des einstellbaren Verstellbereiches liegenden Position sich befindender Lenkspindel
- Fig. 3: einen Schnitt durch den Gegenstand nach Fig. 2 gemäß der Linie A-A
- Fig. 4: eine vergrößert hervorgehobene Einzelheit "Z" des Gegenstandes nach Fig. 2
- Fig. 5: eine teilweise geschnittene Ansicht des wesentlichen Teiles der Lenkvorrichtung bei in einer Endlage des in radialer Richtung einstellbaren Verstellbereiches sich befindender Lenkspindel
- Fig. 6: den Gegenstand nach Fig. 5 bei in einer außerhalb des einstellbaren Verstellbereiches liegenden Position sich befindender Lenkspindel
- Fig. 7: einen vergrößert dargestellten Schnitt durch den Gegenstand nach Fig. 6 gemäß Linie X-X bei einem in Eingriff mit der Radialverzahnung befindlichem Blockierglied
- Fig. 8: einen vergrößert dargestellten Schnitt durch den Gegenstand nach Fig. 6 gemäß Linie Y-Y (Fig. 7) bei einem nicht in Eingriff mit der Radialverzahnung befindlichem Blockierglied.

In den Figuren sind funktions- bzw. wesensgleiche Positionen mit gleichen Bezugsangaben versehen.

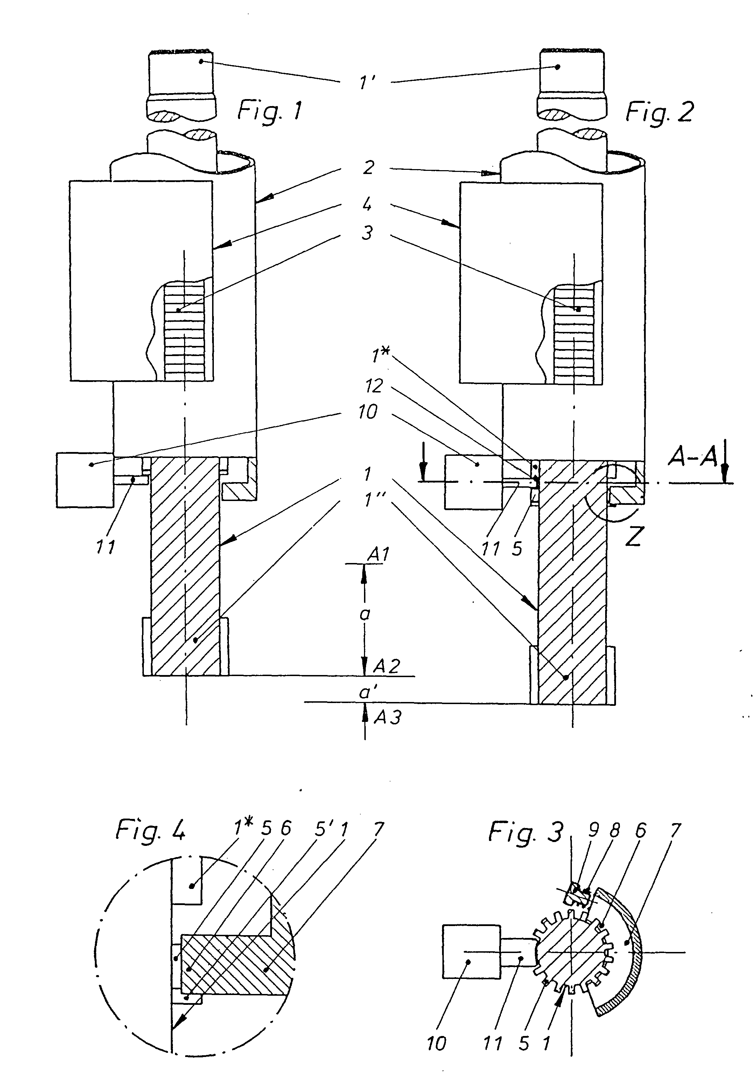

Wie aus den Fig. 1-4 der Zeichnung hervorgeht, ist der obere Teil einer zweiteilig ausgeführten Lenkspindel 1 eines Kraftfahrzeuges teilweise in einem Mantelrohr 2 angeordnet. Das aus dem Mantelrohr herausragende obere Ende 1' der Lenkspindel ist mit einem der Einfachheit halber nicht dargestellten Lenkrad form- und/oder kraftschlüssig verbindbar. Mit dem dargestellten unteren Ende 1" ist z.B. über eine ebenfalls der Einfachheit halber nicht gezeigte Schiebehülse der auch der Einfachheit halber nicht veranschaulichte, dem Lenkgetriebe zugeordnete untere Teil der Lenkspindel 1 formschlüssig derart verbunden, daß eine Axialverstellung der beiden Teile in Relation zueinander durchführbar ist.

Zwecks Verstellung in axialer Richtung ist an der Lenkspindel 1 an ihrem vom Mantelrohr 2 umgebenen Bereich eine zahnstangenartige Axialverzahnung 3 angebracht, die mit einer motorisch betätigten, im einzelnen nicht dargestellten Stellvorrichtung 4 kooperiert, wodurch die Lenkspindel 1 in einem axialen Verstellbereich a zwischen den Positionen A1 und A2 beliebig positionierbar ist, wobei die Position A1 die eine Endlage für die Lenkspindel 1 darstellt.

Darüber hinaus wird bei einer Außerbetriebsetzung des Kraftfahrzeuges - z.B. durch Abziehen des Zündschlüssels-eine weitere Verstellung der Lenkspindel über einen zusätzlichen Verstellbereich a' zwangsläufig vorgenommen. Diese gelangt somit zu der außerhalb des Verstellbereiches a liegenden Position A3, welche die andere Endlage für die Lenkspindel 1 darstellt. In dieser Position ist eine an der Lenkspindel 1 angeordnete, unterhalb der Axialverzahnung 3 vorgesehene Radialverzahnung 5 mit einer Radialverzahnung 6 in Eingriff, die an einem Blockierglied 7 vorhanden ist, das mit dem Mantelrohr 2 verbunden ist. Aufgrund dieses formschlüssigen Eingriffes wird die Lenkspindel 1 gegen jede Drehbewegung gesichert.

Damit bei der Zuordnung der beiden Radialverzahnungen 5,6 zueinander so gut wie keine Kollision der zuerst in Eingriff kommenden Zahnbereiche erfolgen kann, sind diese Bereiche 5' dachförmig ausgeführt. Um den letzten Rest einer solchen Möglichkeit auszuschließen, ist die Radialverzahnung 6 des Blockiergliedes 7 in Umfangsrichtung unter geringfügigem, d.h. von der Zahnausbildung abhängigen Spiel gehalten, wobei das Spielverhalten durch ein unter der Einwirkung eines Federelementes 8 stehendes Bauteil 9 beeinflußt wird.

Um zu verhindern, daß die Lenkspindel 1 während des Fahrbetriebs des Kraftfahrzeuges in die Sperrposition gelangt, ist der den Verstellbereich a begrenzenden, eine Zwischenlage bildenden Position A2 ein über ein magnetisches wirkendes Mittel 10 - wie z.B. einem Hubmagnet - entfernbarer Anschlag 11 zugeordnet, der mit einem an der Lenkspindel vorhandenen Absatz 1* kooperiert. Dieser Anschlag 11 ist als ein einen rechteckförmigen Querschnitt aufweisender Schieber ausgebildet, dessen freies Ende in Abstimmung auf den Radius des Querschnittes der Lenkspindel 1 konkav ausgebildet ist.

Damit auch die Verriegelungsposition gesichert ist, fährt der den Anschlag 11 bildende Schieber dann, wenn die Lenkspindel 1 die außerhalb des Verstellbereiches a liegende Position A3 erreicht hat, in eine Freimachung 12, die zwischen dem die Position A2 definierenden Absatz 1* der Lenkspindel 1 und der Radialverzahnung 5 vorhanden ist.

Natürlich kann anstelle der vorbeschriebenen Blockierung der Lenkspindel 1 auch ein Freilauf derselben realisiert werden, um zu verhindern, daß eine Kraft auf das zugeordnete Lenkgetriebe übertragen wird. In diesem Fall wird z.B. über die Stellvorrichtung 4 die Lenkspindel über die Endlage A1 hinaus bewegt, so daß das Ende 1" mit der eingangs erwähnten Schiebehülse außer Eingriff kommt.

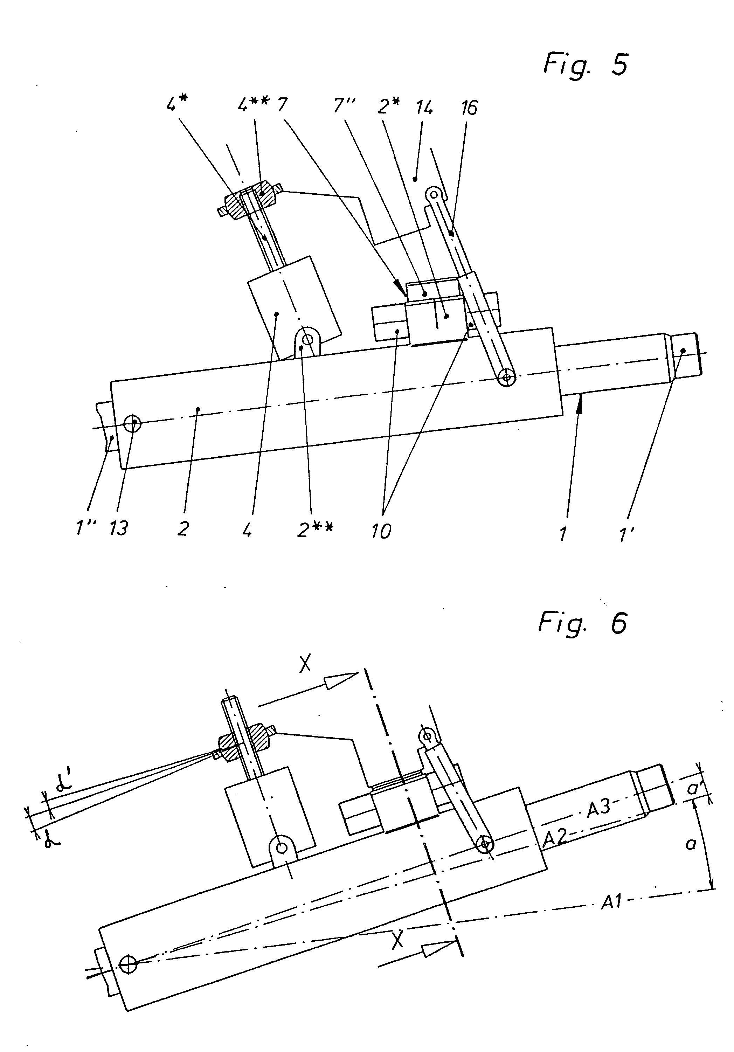

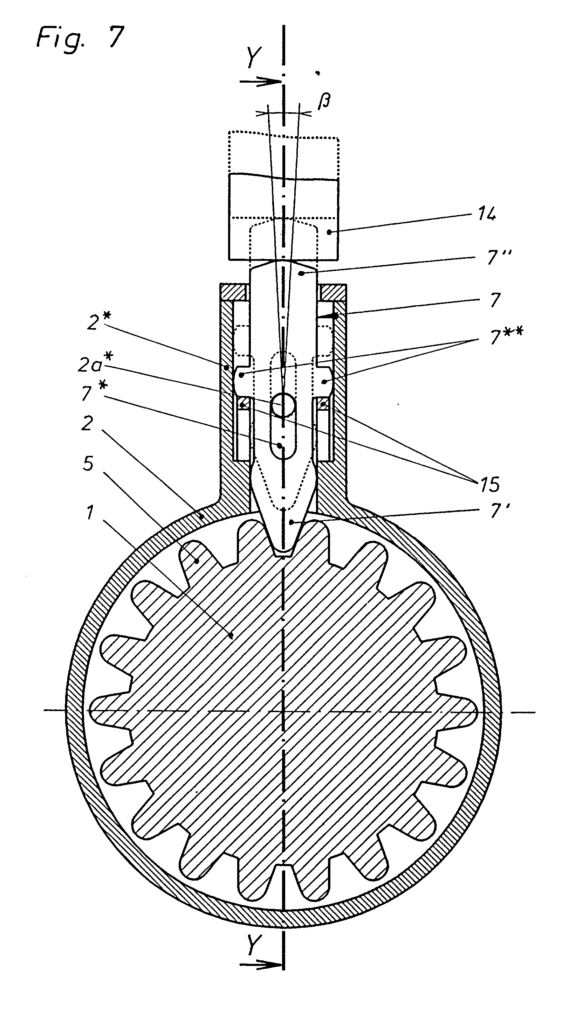

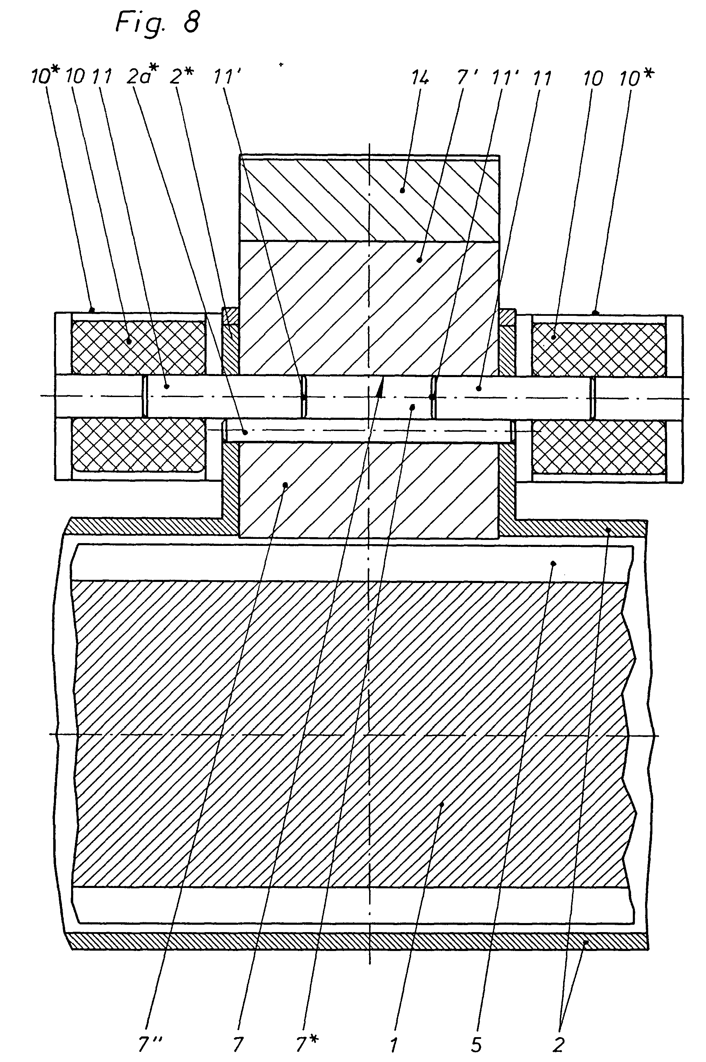

Wie aus den Fig. 5-8 der Zeichnung hervorgeht, ist wiederum der obere Teil einer zweiteilig ausgeführten Lenkspindel 1 eines Kraftfahrzeuges teilweise in einem Mantelrohr 2 angeordnet, wobei auch das aus dem Mantelrohr herausragende obere Ende 1' der Lenkspindel mit einem der Einfachheit halber nicht dargestellten Lenkrad form- und/oder kraftschlüssig verbindbar ist. Mit dem dargestellten unteren Ende 1" ist über einen ebenfalls der Einfachheit halber nicht gezeigten Mechanismus der auch der Einfachheit halber nicht veranschaulichte, dem Lenkgetriebe zugeordnete untere Teil der Lenkspindel 1 formschlüssig derart verbunden, daß eine um eine Drehachse 13 erfolgende Radialverstellung allein oder zusätzlich zu der vorbeschriebenen Axialverstellung der beiden Teile durchführbar ist.

Zwecks Verstellung des oberen Teils der Lenkspindel 1 in radialer Richtung ist an dem die Lenkspindel umgebenden Mantelrohr 2 über eine daran befestigte Halterung 2** eine motorisch betätigte Stellvorrichtung 4 einerseits in einem bestimmten Gesamtwinkelbereich (α + α') schwenkbar gehalten, die andererseits über ihren als verstellbare Spindel 4* ausgeführten Stellmechanismus und ein damit verbundenes Koppelorgan 4** einem ortsfest gehaltenen Auslöseteil 14 beweglich zugeordnet ist. Dadurch ist die Lenkspindel 1 in einem radialen Verstellbereich a zwischen den Positionen A1 und A2 beliebig positionierbar, wobei das Koppelorgan eine Relativbewegung um den Winkelbereich α macht.

Darüber hinaus wird bei einer Außerbetriebsetzung des Kraftfahrzeuges - z.B. durch Abziehen des Zündschlüssels-eine weitere Verstellung der Lenkspindel über einen zusätzlichen Verstellbereich a' zwangsläufig vorgenommen. Diese gelangt somit zu der außerhalb des vorgegebenen Verstellbereiches a liegenden Position A3, wobei das Koppelorgan eine Relativbewegung um den Winkelbereich α ausführt. In dieser Position kommt ein an dem die Lenkspindel umgebenden Mantelrohr angeordnetes Blockierglied 7 mit einer Radialverzahnung 5 in Eingriff, die an der Lenkspindel 1 vorhanden ist. Aufgrund dieses formschlüssigen Eingriffes wird die Lenkspindel 1 gegen jede Drehbewegung gesichert. Damit bei der Zuordnung des Blockiergliedes 7 zu der Radialverzahnung 5 eindeutige Verhältnisse sich ergeben, ist die Radialverzahnung 5 und der derselben zugeordnete eine Endbereich 7' des Blockiergliedes 7 keilförmig ausgebildet und jeweils am äußersten Ende abgerundet ausgeführt. Um auch den letzten Rest eines indifferenten Verhaltens auszuschließen, ist der andere Endbereich 7" des in einem am Mantelrohr 2 vorhandenen Aufnahmekörper 2* angeordneten Blockiergliedes 7 geringfügig, d.h. in einem von der Zahnausbildung abhängigen Umfang um einen Winkel β auslenkbar gehalten. Dabei wird das Spielverhalten durch die Bemessung von zwei an dem Blockierglied 7 angeformten, sich gegenüberliegenden Innenwandabschnitten des Aufnahmekörpers 2* zugeordneten Führungsteilen 7** und die Bemessung des einen, ebenfalls zwei sich gegenüberliegenden Innenwandbereichen des Aufnahmekörpers zugeordneten Endbereichs 7' bestimmt.

Solange die Lenkspindel 1 in einer der Positionen A1 oder A2 bzw. einer Zwischenposition sich befindet, wird das Blockierglied 7 durch zwei in dem Aufnahmekörper 2* angeordnete Federelemente 15 aus dem Eingriffsbereich der Radialverzahnung 5 herausgehalten. Die als blattfederartige Druckfedern ausgebildeten Federelemente 15 stützen sich dabei einerseits jeweils an einer Innenwandzone des Aufnahmekörpers und andererseits an den beiden Führungsteilen 7** des Blockiergliedes ab.

Bei Überführung der Lenkspindel 1 in die Position A3 wird über das Auslöseteil 14 das Blockierglied gegen die Kraft der beiden Druckfedern in Richtung auf die Lenkspindel 1 bewegt und gelangt schließlich mit der Radialverzahnung 5 in Eingriff.
Um zu verhindern, daß die Lenkspindel während des Fahrbetriebes des Kraftfahrzeuges in die Sperrposition gelangt, sind der die Zwischenlage darstellenden den vorgegebenen Verstellbereich a einerseits begrenzenden Position A2 zwei jeweils über ein magnetisches Mittel 10-vorzugsweise über zwei jeweils in einem am Aufnahmekörper 2* angebrachten Gehäuse 10* vorhandene Hubmagnete - entfernbare Anschläge 11 zugeordnet, die mit einem im mittleren Bereich des Blockiergliedes 7 vorhandenen Langloch 7* kooperieren, das sich in Richtung der Längsachse desselben erstreckt und einem am Aufnahmekörper vorhandenen Führungszapfen 2a* zugeordnet ist. Diese Anschläge 11 sind jeweils als einen rechteckförmigen Querschnitt aufweisende Schieber ausgebildet, deren in das Langloch 7* oberhalb des Führungszapfens 2a* von sich gegenüberliegenden Seiten eingreifende freie Enden 11' mit als Einführhilfe anzusehenden Schrägen 11" versehen sind.

Um das Mantelrohr 2 und damit die Lenkspindel 1 einwandfrei im Kraftfahrzeug zu halten, ist das Mantelrohr 2 über zumindest einen teleskopartigen Auszug 16 am Auslöseteil 14 befestigt.

## Patentansprüche

1. Lenkvorrichtung für Kraftfahrzeuge mit einer zumindest partiell von einem Mantelrohr (2) umgebenen Lenkspindel (1), von der das eine Ende mit einem Lenkrad verbunden und das andere Ende einem Lenkgetriebe zugeordnet ist, und die mittels zumindest einer fremdkraftbetätigten Stellvorrichtung (4) in axialer und/oder radialer Richtung innerhalb eines vorgegebenen, durch zwei Endlagen (A1/A3) begrenzten Gesamtverstellbereiches (a+a') einstellbar ist, welcher Gesamtverstellbereich in einen durch die eine Endlage (A1) und eine Zwischenanlage (A2) begrenzten ersten Verstellbereich (a), in dem eine über das Lenkrad auf die Lenkspindel (1) ausgeübte Torsionskraft auf das Lenkgetriebe übertragbar ist, und einen durch die Zwischenlage (A2) und die andere Endlage (A3) begrenzten zweiten Verstellbereich (a') aufgeteilt ist, wobei die Torsionskraft zumindest in der anderen Endlage (A3) nicht auf das Lenkgetriebe übertragbar ist, **dadurch gekennzeichnet, daß** die Stellvorrichtung (4) so ausgebildet und/oder so angeordnet ist, daß die Lenkspindel (1) bei in Betrieb befindlichem Kraftfahrzeug aufgrund von zumindest einem in der Zwischenlage (A2) der Lenkspindel (1) zugeordneten, entfernbaren Anschlag (11) nur innerhalb des ersten Verstellbereichs (a) einstellbar ist und daß bei Außerbetriebsetzung des Kraftfahrzeugs die Verstellung der Lenkspindel (1) unter Entfernung des Anschlags (11) über den zweiten Verstellbereich (a') in die andere Endlage (A3) zwangsläufig eingeleitet ist.

2. Lenkvorrichtung nach Anspruch 1, **dadurch gekennzeichnet, daß** in der außerhalb des Verstellbereichs (a) befindlichen Position (A3) die Lenkspindel (1) einem ortsfest im Kraftfahrzeug gehaltenen Blockierglied (7) unter Bildung eines Formschlusses zugeordnet ist.

3. Lenkvorrichtung nach Anspruch 2, **dadurch gekennzeichnet, daß** das Blockierglied (7) an dem die Lenkspindel (1) umgebenden Mantelrohr (2) befestigt ist.

4. Lenkvorrichtung nach einem der Ansprüche 1 bis 3, **dadurch gekennzeichnet, daß** der Formschluß durch eine die Lenkspindel (1) zumindest partiell umgebende, am Blockierglied (7) vorhandene, senkrecht zur Längsachse der Lenkspindel verlaufende Radialverzahnung (6) und eine damit kooperierende, an der Lenkspindel (1) entsprechend vorgesehene Radialverzahnung (5) realisiert ist.

5. Lenkvorrichtung nach Anspruch 4, **dadurch gekennzeichnet, daß** die beiden miteinander kooperierenden Radialverzahnungen (5,6) bei ihrer Zuordnung zueinander an ihren zuerst in Eingriff kommenden Zahnbereichen (5', (6')) dachförmig ausgeführt sind.

6. Lenkvorrichtung nach Anspruch 5, **dadurch gekennzeichnet, daß** die am Blockierglied (7) vorhandene Radialverzahnung (6) in Umfangsrichtung mit einem auf die Zahnbreite abgestimmten geringfügigen Spiel an demselben gehalten ist.

7. Lenkvorrichtung nach Anspruch 6, **dadurch gekennzeichnet, daß** der Spielbereich von einem unter der Einwirkung eines Federelementes (8) stehenden Bauteil (9) beeinflußbar ist.

8. Lenkvorrichtung nach einem der Ansprüche 1 bis 7, **dadurch gekennzeichnet, daß** die Lenkspindel (1) für die Axialverstellung eine zahnstangenartige Axialverzahnung (3) aufweist, und daß einem mit der unteren Endlage (A2) des Verstellbereiches (a) korrespondierenden Absatz (1*) der Lenkspindel (1) ein entfernbarer Anschlag (11) zugeordnet ist.

9. Lenkvorrichtung nach Anspruch 8, **dadurch gekennzeichnet, daß** der Anschlag (11) durch elektromagnetische Mittel (10) entfernbar ist.

10. Lenkvorrichtung nach einem der Ansprüche 8 oder 9, **dadurch gekennzeichnet, daß** der Anschlag (11) als ein einen rechteckförmigen Querschnitt aufweisender Schieber ausgebildet ist.

11. Lenkvorrichtung nach Anspruch 10, **dadurch gekennzeichnet, daß** das der Lenkspindel (1) zugeordnete freie Ende des Schiebers entsprechend dem Radius des Lenkspindel-Querschnitts konkav ausgeführt ist.

12. Lenkvorrichtung nach einem der vorhergehenden Ansprüche, **dadurch gekennzeichnet, daß** zwischen dem mit der unteren Endlage (A3) korrespondierenden Absatz (1*) und der Radialverzahnung (5) ein Freiraum (12) an der Lenkspindel (1) vorhanden ist, in den der Schieber beim Erreichen der außerhalb des Verstellbereichs (a) liegenden Position (A3) quasi spielfrei einfährt.

13. Lenkvorrichtung nach einem der vorhergehenden Ansprüche, **dadurch gekennzeichnet, daß** die Lenkspindel (1) in der außerhalb des Verstellbereiches (a) befindlichen Position nicht mehr mit dem Lenkgetriebe in Eingriff sondern freilaufend ist.

14. Lenkvorrichtung nach Anspruch 13, **dadurch gekennzeichnet, daß** die Lenkspindel (1) in der Nähe der Stellvorrichtung (4) geteilt ausgeführt ist, und daß die beiden Lenkspindelteile in der außerhalb des Verstellbereiches (a) befindlichen Position voneinander entkoppelt sind.

15. Lenkvorrichtung nach einem der Ansprüche 1 bis 3, **dadurch gekennzeichnet, daß** der Formschluß durch eine an der Lenkspindel (1) vorgesehene Radialverzahnung (5) und das radial zur Lenkspindel (1) verstellbare, mit einem keilförmig ausgebildeten Endbereich (7') in die Radialverzahnung (5) eingreifende Blockierglied (7) realisiert ist.

16. Lenkvorrichtung nach einem der Ansprüche 1,2 oder 15, **dadurch gekennzeichnet, daß** die Lenkspindel (1) für ihre zusammen mit dem Mantelrohr (2) erfolgende Radialverstellung über die Stellvorrichtung (4) um eine Schwenkachse (13) bewegbar ist, die von dem dem Lenkrad zugeordneten einen Ende (1') der Lenkspindel entfernt vorhanden ist, daß das am Mantelrohr (2) angeordnete Blockierorgan (7) einem auf den dem keilförmigen einen Endbereich (7') gegenüberliegenden anderen Endbereich (7") einwirkenden, ortsfest gehaltenen Auslöseteil (14) zugeordnet ist und daß das Blockierglied (7) unter der Einwirkung von zumindest einem Federelement (15) derart gehalten ist, daß der keilförmige eine Endbereich (7') bei nicht am Auslöseteil (14) anliegendem anderen Endbereich (7") mit der Radialverzahnung (5) nicht in Eingriff ist.

17. Lenkvorrichtung nach Anspruch 16, **dadurch gekennzeichnet, daß** das Blockierglied (7) in einem am Mantelrohr (2) vorhandenen Aufnahmekörper (2*) untergebracht ist.

18. Lenkvorrichtung nach einem der Ansprüche 16 oder 17, **dadurch gekennzeichnet, daß** das Blockierglied (7) als ein unter der Einwirkung des als Druckfeder ausgebildeten, in dem Aufnahmekörper (2*) angeordneten zumindest einen Federelementes (15) stehendes Riegelorgan ausgebildet ist.

19. Lenkvorrichtung nach Anspruch 18, **dadurch gekennzeichnet, daß** das als Riegelorgan ausgebildete Blockierglied (7) mit einem im Bereich seiner Längsachse vorgesehenen Langloch (7*) versehen ist, das einem im Aufnahmekörper (2*) ortsfest vorhandenen Zapfen (2a*) zugeordnet ist.

20. Lenkvorrichtung nach einem der Ansprüche 16 bis 19, **dadurch gekennzeichnet, daß** das als Riegelorgan ausgebildete Blockierglied (7) mit seinem einen Endbereich (7') im Aufnahmekörper (2*) quasi spielfrei verschiebbar geführt ist und mit seinem anderen Endbereich (7") um einen bestimmten Winkel β bezüglich seiner Längsachse auslenkbar ist.

21. Lenkvorrichtung nach einem der Ansprüche 16 bis 20, **dadurch gekennzeichnet, daß** das Blockierglied (7) zumindest einem entfernbaren Anschlag (11) zugeordnet ist.

22. Lenkvorrichtung nach Anspruch 21, **dadurch gekennzeichnet, daß** zwei jeweils durch elektromagnetische Mittel (10) entfernbare Anschläge (11) vorhanden sind, die jeweils in einem dem Aufnahmekörper (2*) des Blockiergliedes (7) zugeordneten Gehäuse (10*) angeordnet sind.

23. Lenkvorrichtung nach Anspruch 22, **dadurch gekennzeichnet, daß** die Anschläge (11) jeweils als einen rechteckförmigen Querschnitt aufweisende Schieber ausgebildet sind, deren freie Enden (11') dem im Blockierorgan (7) vorhandenen Langloch (7*) zugeordnet sind.

24. Lenkvorrichtung nach Anspruch 23, **dadurch gekennzeichnet, daß** die dem im Blockierorgan (7) vorhandenen Langloch (7*) zugeordneten freien Enden (11') der Schieber mit als Einführhilfe dienenden Schrägen (11") versehen sind.

25. Lenkvorrichtung nach Anspruch 24, **dadurch gekennzeichnet, daß** das Langloch (7*) sich in Richtung der Längsachse der Lenkspindel (1) erstreckt und daß das den elektromagnetischen Mitteln (10) jeweils zugeordnete Gehäuse (10*) am Aufnahmekörper (2*) angebracht ist.

26. Lenkvorrichtung nach einem der vorhergehenenden Ansprüche, **dadurch gekennzeichnet, daß** die Stellvorrichtung (4) elektromotorisch betrieben wird.

## Claims

1. Steering facility for motor vehicles with a steering shaft (1) which is at least partially enclosed by a steering column tube (2) and of which one end is connected to a steering wheel and the other end assigned to a steering gear and which is adjustable in the axial and/or radial direction within a specified total adjustment range (a+a') by means of at least one regulating device (4) which is motor-actuated, which total adjustment range is divided into an initial adjustment range (a) bounded by the one end position (A1) and an intermediate position (A2) and in which a torsional force exercised on the steering shaft (1) by way of the steering wheel can be transferred to the steering gear, and a second adjustment range (a') bounded by the intermediate position (A2) and the other end position (A3), whereby, at least in the other end position (A3), the torsional force cannot be transmitted to the steering gear,
**characterized by the fact that** the regulating device (4) is constructed and/or arranged in such a way that the steering shaft (1) in a motor vehicle in driving mode is only adjustable within its initial adjustment range (a) due to at least one removable limit stop (11) assigned to the intermediate position (A2) of the steering shaft (1) and that, in the event of the motor vehicle being switched off, the adjustment of the steering shaft (1) over the second adjustment range (a') to the other end position (A3) is forcibly initiated upon removal of the limit stop (11).

2. Steering facility in accordance with Claim 1, **characterized by** the fact that, in position A3 located outside the adjustment range (a), the steering shaft (1) is allocated to a stationary blocking member (7) mounted in the vehicle forming a positive locking.

3. Steering facility in accordance with Claim 2, **characterized by** the fact that the blocking member (7) is attached to the steering column tube (2) enclosing the steering shaft (1).

4. Steering facility in accordance with one of Claims 1 to 3, **characterized by** the fact that the positive locking is effected by a radial toothing (6) provided on the blocking member (7) extending vertically to the longitudinal axis of the steering shaft and at least partially enclosing the steering shaft (1) and a corresponding radial toothing (5) provided on the steering shaft (1) cooperating with the same.

5. Steering facility in accordance with Claim 4, **characterized by** the fact that at their tooth zones (5',6') which initially engage in each other the two intercooperating radial toothings (5,6) form a roof-like construction in their allocation to each other.

6. Steering facility in accordance with Claim 5, **characterized by** the fact that the radial toothing (6) provided on the blocking member (7) is held on the same in the circumferential direction with a negligible clearance harmonized to the tooth width.

7. Steering facility in accordance with Claim 6, **characterized by** the fact that the clearance range of a component which reacts to a spring element (8) can be influenced.

8. Steering facility in accordance with any of Claims 1 to 7, **characterized by** the fact that the steering shaft (1) features a rack-type axial toothing (3) for the axial adjustment and that a removable limit stop (11) is assigned to a projection (1*) on the steering shaft (1) to correspond with the lower end position (A2) of the adjustment range (a).

9. Steering facility in accordance with Claim 8, **characterized by** the fact that the limit stop (11) is removable by way of electro-magnetic means (10).

10. Steering facility in accordance with Claim 8 or Claim 9, **characterized by** the fact that the limit stop (11) is designed as a slider featuring a rectangularly shaped cross-section.

11. Steering facility in accordance with Claim 10, **characterized by** the fact that the free end of the slider allocated to the steering shaft (1) is concavely designed to correspond with the radius of the steering shaft cross-section.

12. Steering facility in accordance with one of the previous Claims, **characterized by** the fact that between the projection (1*) corresponding with the lower end position (A3) and the radial toothing (5) there is a clearance space (12) on the steering shaft (1) into which the slider enters with virtually zero play upon gaining position (A3) situated outside the adjustment range (a).

13. Steering facility in accordance with one of the previous Claims, **characterized by** the fact that, in the position located outside the adjustment range (a), the steering shaft (1) is no longer engaged in the steering gear, but is instead freerunning.

14. Steering facility in accordance with Claim 13, **characterized by** the fact that the steering shaft (1) is designed with a division in the vicinity of the regulating device (4) and that the two parts of the steering shaft are decoupled from each other in the position located outside the adjustment range (a).

15. Steering facility in accordance with one of Claims 1 to 3, **characterized by** the fact that the positive locking is effected by a radial toothing (5) provided on the steering shaft (1) and the blocking member (7) which can be adjusted radially to the steering shaft (1) and features a wedge-shaped end zone (7') which engages in the radial toothing (5).

16. Steering facility in accordance with any of Claims 1, 2 or 15, **characterized by** the fact that the steering shaft (1) is movable around a swivelling axis (13) for the purpose of effecting its radial adjustment together with the steering column tube (2) by way of the regulating device (4), which swivelling axis is at a distance from the one end (1') of the steering shaft allocated to the steering wheel, that the blocking member (7) provided on the steering column tube (2) is allocated to a trigger element (14) which is held in a stationary manner and acts on the one end zone (7") opposing the other wedge-shaped end zone (7') and that the blocking member (7) is held under the influence of at least one spring element (15) in such a way that the one wedge-shaped end zone (7') does not engage in the radial toothing (5) unless the other end zone (7") is adjacent to the trigger element (14).

17. Steering facility in accordance with Claim 16, **characterized by** the fact that the blocking member (7) is accommodated in a receptacle body (2*) provided on the steering column tube (2).

18. Steering facility in accordance with one of Claims 16 or 17, **characterized by** the fact that the blocking member (7) is designed as an interlocking organ which is under the influence of at least one spring element (15) designed as a pressure spring and arranged in a receptacle body (15).

19. Steering facility in accordance with Claim 18, **characterized by** the fact that the blocking member (7) designed as an interlocking organ is provided with an oblong hole (7*) in the range of its longitudinal axis which coordinates with a stationary pin (2a*) in the receptacle body (2*).

20. Steering facility in accordance with one of Claims 16 to 19, **characterized by** the fact that the blocking member (7) designed as an interlocking organ is guided with its one end zone (7') into the receptacle body (2*) in a virtually clearance-free, slidable manner and can be pivoted with its other end zone (7") around a specific angle β in relation to its longitudinal axis.

21. Steering facility in accordance with one of Claims 16 to 20, **characterized by** the fact that the blocking member (7) is allocated to at least one removable limit stop (11).

22. Steering facility in accordance with Claim 21, **characterized by** the fact that there are two limit stops (11), each of which can be removed by electro-magnetic means (10) and each of which is arranged in a housing (10*) allocated to the receptacle body (2*) of the blocking member (7).

23. Steering facility in accordance with Claim 22, **characterized by** the fact that each of the limit stops (11) is designed as a slider which has a rectangular cross-section and the free ends (11') of which are allocated to the oblong hole (7*) in the blocking member (7).

24. Steering facility in accordance with Claim 23, **characterized by** the fact that the free ends (11') of the slider allocated to the oblong hole (7*) in the blocking member (7) are provided with bevels (11") which serve as insertion aids.

25. Steering facility in accordance with Claim 24, **characterized by** the fact that the oblong hole (7*) extends in the direction of the longitudinal axis of the steering shaft (1) and that the housing (10*) allocated to the respective electro-magnetic means (10) is mounted on the receptacle body (2*).

26. Steering facility in accordance with one of the previous Claims, **characterized by** the fact that the regulating device (4) is electro-motor driven.

## Revendications

1. Dispositif de direction pour véhicules automobiles comprenant un arbre de direction (1) entouré, au moins partiellement, d'une gaine tubulaire (2), l'une des extrémités de cet arbre de direction (1) étant reliée à un volant et l'autre coordonnée à un mécanisme de direction, ledit arbre de direction
(1) pouvant être ajusté axialement et/ou radialement, à l'aide d'au moins un dispositif de réglage
(4) actionné par force extérieure, la plage de réglage globale (a+a'), prédéfinie étant limitée par deux positions finales (A1/A3),
**caractérisé en ce que**
le dispositif de réglage (4) est conçu et/ou disposé de sorte que l'arbre de direction (1), lorsque le véhicule automobile est en marche, ne soit réglable qu'au sein de la première plage de réglage (a), en raison d'au moins une butée (11) amovible, coordonnée, dans la position intermédiaire (A2), à l'arbre de direction (1) et que, lorsque le véhicule automobile est hors de service, le réglage de l'arbre de direction (1) dans l'autre position finale (A3) soit initié, de force, en passant par la deuxième zone de réglage (a'), la butée (11) étant enlevée.

2. Dispositif de direction selon la revendication 1,
**caractérisé en ce que**,
dans la position (A3), située en dehors de la zone de réglage (a), l'arbre de direction (1) est coordonné à un organe de blocage (7) qui est maintenu fixement dans le véhicule, par engagement géométrique.

3. Dispositif de direction selon la revendication 2,
**caractérisé en ce que**
l'organe de blocage (7) est fixé à la gaine tubulaire (2) qui entoure l'arbre de direction (1).

4. Dispositif de direction selon l'une des revendications 1 à 3,
**caractérisé en ce que**
l'engagement géométrique est réalisé par une denture radiale (6) perpendiculaire à l'axe longitudinal de l'arbre de direction (1) qui équipe l'organe de blocage (7) et entoure, au moins partiellement, l'arbre de direction (1), et une denture radiale (5) coopérante dont l'arbre de direction (1) est équipé adéquatement.

5. Dispositif de direction selon la revendication 4,
**caractérisé en ce que**,
dans le cadre de leur coopération, les dentures radiales (5, 6) présentent des zones dentées (5', 6') qui, étant les premières à entrer en prise, sont exécutées en forme de toit.

6. Dispositif de direction selon la revendication 5,
**caractérisé en ce que**
la denture radiale (6) équipant l'organe de blocage (7) est maintenue, sur celui-ci, dans le sens périphérique, avec un faible jeu adapté à une largeur de dent.

7. Dispositif de direction selon la revendication 6,
**caractérisé en ce que**
le jeu peut être soumis à l'influence d'un élément (9) commandé par ressort (8).

8. Dispositif de direction selon l'une des revendications 1 à 7,
**caractérisé en ce que**
l'arbre de direction (1) présente, pour le réglage axial, une denture axiale (3) du genre crémaillère et qu'une butée amovible (11) est coordonnée à une butée (1*) de l'arbre de direction (1) qui correspondant à la position finale (A2) de la zone de réglage (a).

9. Dispositif de direction selon la revendication 8,
**caractérisé en ce que**
la butée (11) peut être retirée à l'aide de dispositifs électromagnétiques (10).

10. Dispositif de direction selon l'une des revendications 8 ou 9,
**caractérisé en ce que**
la butée (11) est conçue en forme de coulisseau présentant une section transversale rectangulaire.

11. Dispositif de direction selon la revendication 10,
**caractérisé en ce que**
l'extrémité libre du coulisseau coordonnée à l'arbre de direction (1) est exécutée conformément au rayon de la section transversale de l'arbre de direction.

12. Dispositif de direction selon l'une des revendications précédentes,
**caractérisé en ce que**,
entre la butée (1*) correspondant à la position finale inférieure et la denture radiale (5), l'arbre de direction (1) présente un espace libre (12) dans lequel le coulisseau s'engage pratiquement sans jeu lorsque la position (A3), située en dehors de la zone de réglage (a), est atteinte.

13. Dispositif de direction selon l'une des revendications précédentes,
**caractérisé en ce que**
l'arbre de direction (1) en position située en dehors de la zone de réglage (a) n'est plus en prise avec le mécanisme de direction, mais en mouvement libre.

14. Dispositif de direction selon la revendication 13,
**caractérisé en ce que**
l'arbre de direction (1) est divisé à proximité du dispositif de réglage (4) et que les deux parties de l'arbre de direction sont désaccouplées dans la position située en dehors de la zone de réglage (a).

15. Dispositif de direction selon l'une des revendications 1 à 3,
**caractérisé en ce que**
l'engrènement est réalisé par l'entrée en prise d'un organe de blocage (7) à extrémité cunéiforme (7') avec une denture radiale (5) qui équipe l'arbre de direction (1).

16. Dispositif de direction selon l'une des revendication 1, 2 ou 15,
**caractérisé en ce que**
l'arbre de direction (1), en vue de son régalge radial en commun avec la gaine tubulaire (2), peut être mue autour d'un axe de pivotement (13) disposé à distance d'une extrémité (1') de l'arbre de direction coordonnée au volant,
que l'organe de blocage (7), équipant la gaine tubulaire (2), est coordonné à un déclencheur (14), stationnaire, agissant sur le secteur final (7'') situé à l'opposé du secteur final cunéiforme (7') et
que l'organe de blocage (7) est maintenu sous l'effet d'au moins un élément ressort (15) de sorte que le secteur final cunéiforme (7') ne soit pas en prise avec la denture radiale (5) quand l'autre extrémité (7'') ne porte pas contre le déclencheur (14).

17. Dispositif de direction selon la revendication 16,
**caractérisé en ce que**
l'organe de blocage (7) est logé dans un réceptacle (2*) qui équipe la gaine tubulaire (2).

18. Dispositif de direction selon l'une des revendications 16 ou 17,
**caractérisé en ce que**
l'organe de blocage (7) est conçu en tant qu'organe de verrouillage soumis à l'action d'au moins un élément en forme de ressort de pression (15) logé dans le réceptacle (2*).

19. Dispositif de direction selon la revendication 18,
**caractérisé en ce que**
l'organe de blocage (7), conçu en forme de dispositif de verrouillage, est pourvu d'un trou oblong (7*), qui, prévu dans une zone de son axe longitudinal, est coordonné à un tourillon (2a*) logé stationnairement dans le réceptacle (2*).

20. Dispositif de direction selon l'une des revendications 16 à 19,
**caractérisé en ce que**
l'une des extrémité (7') de l'organe de blocage (7), conçu en tant que dispositif de verrouillage, peut être introduite, pratiquement sans jeu, dans le réceptacle (2*), tandis que l'autre extrémité (7''), en ce qui concerne son axe longitudinal, peut être pivotée d'un angle β déterminé.

21. Dispositif de direction selon l'une des revendications 16 à 20,
**caractérisé en ce que**
l'organe de blocage (7) est coordonné à, au moins, une butée amovible (11).

22. Dispositif de direction selon la revendication 21,
**caractérisé en ce que**
deux butées (11), amovibles chacune à l'aide d'un auxiliaire électromagnétique (10), sont prévues et sont disposées, chacune, dans un boîtier (10*) subordonné au réceptacle (2*).

23. Dispositif de direction selon la revendication 22,
**caractérisé en ce que**
les butées (11) sont conçues, chacune, en forme de coulisseau à section transversale rectangulaire dont les extrémités libres (11') sont coordonnées au trou oblong (7*) de l'organe de blocage (7).

24. Dispositif de direction selon la revendication 23,
**caractérisé en ce que**
les extrémités libres (11') des butées, coordonnées au trou oblong (7*), qui est prévu dans l'organe de blocage (7), présentent des secteurs biseautés (11'') pour faciliter l'introduction.

25. Dispositif de direction selon la revendication 24,
**caractérisé en ce que**
le trou oblong (7*) s'étend dans le sens de l'axe longitudinal de l'arbre de direction (1) et que les boîtiers (10*), coordonnés aux auxiliaires électromagnétiques (10), sont fixés au réceptacle (2*).

26. Dispositif de direction selon l'une des revendications précédentes,
**caractérisé en ce que**
le dispositif de réglage (4) est commandé par moteur électrique.
